# EUROPEAN PATENT SPECIFICATION

(11) **EP 3 330 591 B1**
(45) Date of publication and mention of the grant of the patent: **24.07.2019**
(21) Application number: 17204791.2
(22) Date of filing: 30.11.2017
(51) Int. Cl.: F17C 13/04

(54) **SAFETY CAP FOR A PRESSURISED FLUID STORAGE VESSEL**
SICHERHEITSKAPPE FÜR EINEN UNTER DRUCK STEHENDEN FLUIDSPEICHERBEHÄLTER
BOUCHON DE SÉCURITÉ DESTINÉ À UN RÉCIPIENT DE STOCKAGE DE FLUIDE SOUS PRESSION

(30) Priority: 30.11.2016 GB 201620337
(43) Date of publication of application: 06.06.2018
(73) Proprietor: Kidde Graviner Limited, Slough, Berkshire SL3 0HB (GB)
(72) Inventor: CHATTAWAY, Adam, Windsor, Berkshire SL4 2QG (GB); HAGGE, Harlan, Knightdale, NC 27545 (US)
(74) Representative: Dehns

(56) References cited:
- US-A1- 2011 139 801

## Description

### CROSS-REFERENCE TO RELATED APPLICATION

None.

### FIELD OF THE INVENTION

The present invention relates generally to storage vessels for pressurised fluid and in particular to safety caps for vessels such as gas cylinders for use in fire suppression.

### BACKGROUND

It is well known to store pressurised gas in storage vessels. For example, pressurised gas such as inert gas, Halon or alternative agents may be stored in cylinders for use in fire suppression systems. These vessels have a valve that is configured to be opened when it is desired to discharge the gas from the vessel. For example, the valve may be a burst disk, a rupturable diaphragm or another type of valve that is intended to remain closed until it is desired to discharge the gas from the vessel. During storage, transportation, and handling of the pressurised vessels it is highly undesirable and potentially hazardous for the discharge valve to inadvertently open and allow the pressurised gas to discharge, e.g. due to the gas itself being hazardous and/or the rapid discharge of the gas causing the storage vessel to violently recoil. If precautions are not taken then then this may occur, for example, if the pressurised vessel is mistakenly dropped or falls over. In order to avoid such inadvertent discharge of the gas from the vessel, a protective cap may be screwed onto the storage vessel so as to cover the discharge valve and protect it from impact or damage.

However, such protective caps must be removed from the vessel before the discharge port of the vessel can be connected to other equipment for receiving the gas when it is desired to be discharged. For example, in a fire suppression system the protective cap must be removed from the gas cylinder before the cylinder can be mounted in the mounting bracket and/or connected to the gas distribution pipework. Removal of the protective cap therefore poses a potential safety hazard during the period that the discharge port of the vessel is being connected to other equipment for receiving the gas, since the valve may be inadvertently actuated.

US 2011/139801 discloses a cap device of a gas cylinder valve.

### SUMMARY

Embodiments of the invention provide a safety cap for a pressurised fluid storage vessel comprising:
an entrance port for receiving fluid from the fluid storage vessel;
at least one pair of anti-recoil apertures through one or more wall of the cap;
an exit port; and
a valve that is movable between first and second positions;
wherein the valve is movable between:
   (i) a first position in which the entrance port and anti-recoil apertures are in fluid communication such that fluid is able to flow out of the safety cap through the anti-recoil apertures and in opposing directions; and
   (ii) a second position in which the fluid is unable to exit the safety cap through the anti-recoil apertures and in which the entrance port and exit port are in fluid communication such that fluid is able to flow from the entrance port, through the exit port and out of the safety cap.

When the valve is in the first position, the fluid may substantially only be able to exit the safety cap through the anti-recoil apertures. Optionally, the cap is configured such that when the valve is in the first position the fluid is prevented from flowing out of the cap along the axis through the exit port. As such, if the fluid is discharged from the storage vessel (e.g. inadvertently) then the safety cap will ensure that the discharge forces counteract each other and substantially prevent recoil of the cap, and hence prevent recoil of the storage vessel. When it is desired to discharge the fluid from the storage vessel (e.g. when storage vessel is properly installed or connected), the valve is, or has automatically been, moved to the second position so that the fluid can be discharged. The safety cap is therefore able to operate in both modes and the cap need not be removed from the fluid storage vessel.

The fluid storage vessel described herein may store fluid in the form of liquid, vapour or gas. The fluid storage vessel may also store a powder which may be expelled with the liquid, gas or vapour when the fluid storage vessel is discharged.

The fluid received at the entrance port and/or exit port and/or anti-recoil apertures of the safety cap may be a liquid, gas or vapour, although it is desirably a gas or vapour even if the storage vessel stores liquid (e.g. the gas or vapour is stored under pressure as a liquid in the storage vessel). If a powder is present in the storage vessel, then the powder may be discharged from the storage vessel in the gas or vapour.

The valve may be biased towards the first position.

The cap may comprise one or more resilient biasing members for biasing the valve towards the first position. Optionally, the one or more biasing members is a spring.

The valve may be movable to the second position upon insertion of an object into the exit port or by attachment of a connector to the exit port.

Each pair of anti-recoil apertures may comprise a first aperture arranged, when the valve is in the first position, to allow the fluid (e.g. gas) to exit the cap in a first direction and a second aperture arranged to allow the fluid (e.g. gas) to exit the cap in a second, opposite direction. It is also contemplated that the apertures need not be diametrically opposed, but may be opposed in the sense that the net force due to the gas exiting the apertures is substantially zero. For example, any number (greater than one) of equidistantly spaced apertures could be provided around the cap. For example, three apertures spaced 120 degrees apart around the cap would provide zero net force.

The axes through the first and second apertures may be co-axial.

The safety cap may comprise first connecting means proximate the entrance port for securing the cap to the storage vessel. Additionally, or alternatively, the safety cap may comprise second connecting means proximate the exit port for securing the cap to a connector of another equipment.

Optionally, the first connecting means may comprise a screw thread. Alternatively, the first connecting means may not be a screw thread but may be any other type of releasable connection for repeatedly engaging and disengaging the storage vessel. Alternatively, the first connecting means may be adapted to permanently engage the fluid storage vessel.

Optionally, the second connecting means may comprise a screw thread. Alternatively, the second connecting means may not be a screw thread but may be any other type of releasable connection for repeatedly engaging and disengaging the connector. Alternatively, the second connecting means may be adapted to permanently engage the connector.

In a first set of embodiments, the safety cap may comprise a housing defining the entrance and exit ports, wherein the valve comprises a carriage member having the anti-recoil apertures arranged therein and that is movable within the housing such that when the valve is in the first position the carriage member fills the exit port and protrudes therethrough so that the anti-recoil apertures are arranged outside of the housing for permitting fluid (e.g. gas) to flow from the entrance port, through the housing and out of the cap through the anti-recoil apertures.

The carriage member may be movable within the housing such that when the valve is in the second position the anti-recoil apertures are retracted within the housing.

The cap may be configured such that when the valve is in the second position the carriage member does not fill the exit port.

The cap may be configured such that when the valve is in the second position the fluid (e.g. gas) is able to flow from the entrance port, around and/or through the carriage member and out of the exit port; and/or the cap may be configured such that when the valve is in the first position the fluid (e.g. gas) is not able to flow around the carriage member and out of the exit port.

In a second set of embodiments, the safety cap may comprise a housing defining the entrance port, exit port and anti-recoil apertures; wherein the valve comprises one or more blocking members arranged so that when the valve is in the first position the one or more blocking members prevent fluid (e.g. gas) flowing from the entrance port out of the exit port, and when the valve is in the second position the one or more blocking members move so as to cover the anti-recoil apertures such that fluid is unable to flow from the entrance port and out of the anti-recoil apertures.

Embodiments of the invention provide a fluid storage system comprising:
a fluid storage vessel having a discharge port for discharging pressurised fluid stored therein; and
a safety cap as described herein connected, or connectable, to the storage vessel such that the entrance port of the safety cap is arranged over the discharge port of the storage vessel.

The storage vessel may contain a pressurised gas or vapour, optionally stored in liquid form.

The storage vessel may contain a fire suppressant, such as inert gas and/or a powder.

The storage vessel may comprise a discharge valve at or upstream of the discharge port.

The discharge valve may be a burst disc that opens when the pressurised fluid (e.g. gas) in the vessel reaches a predetermined pressure, or may comprise an electronically, pyrotechnically or manually actuated valve.

The system may further comprise a fluid (e.g. gas) connector connected, or configured to be connectable, to the exit port of the safety cap in a fluid tight manner, wherein the fluid connector and safety cap valve are configured so that upon connection of the fluid connector to the exit port the valve is automatically moved from the first position to the second position.

The fluid connector and exit port may comprise screw threads for performing said connection. Alternatively, any other means of connection may be used. The means of connection may allow the exit port and fluid connector to be repeatedly engaged and disengaged, or may be configured to form a permanent connection.

The fluid connector may be configured with a portion that extends into the exit port after connection so as to force the valve from the first position to the second position; and/or the valve may be configured with a protrusion that extends in a downstream direction so that after connection the gas connector abuts the protrusion and maintains the valve in the second position.

The system may further comprise fluid (e.g. gas) distribution piping connected to the fluid connector for conveying the fluid from the fluid connector to another area, such as an area to be protected from fire.

The distribution piping may be connected to one or more fluid (e.g. gas) distribution nozzles.

### BRIEF DESCRIPTION OF THE DRAWINGS

Various embodiments will now be described, by way of example only, and with reference to the accompanying drawings in which:
Fig. 1 shows a schematic of a prior art gas storage system comprising a pressurised gas cylinder and a safety cap for protecting the discharge valve of the cylinder;
Fig. 2A shows a schematic of a safety cap according to a first embodiment of the invention when the valve is in a first position; and Fig. 2B shows the embodiment of Fig. 2A when the valve is in a second position; and
Fig. 3A shows a schematic of a safety cap according to a second embodiment of the invention when the valve is in a first position; and Fig. 3B shows the embodiment of Fig. 3A when the valve is in a second position.

### DETAILED DESCRIPTION

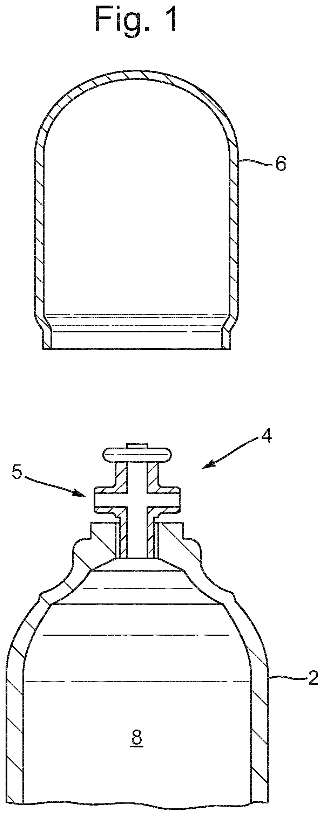

Fig. 1 shows a schematic of a prior art gas storage system comprising a pressurised gas cylinder 2 having a discharge valve 4 comprising a discharge port 5, and a safety cap 6 for protecting the discharge valve. Once the body of the cylinder 8 has been filled with pressurised gas, the discharge valve 4 is sealed such that the gas cannot exit the cylinder 2 through the discharge port 5. The cap 6 is then screwed on to the end of the gas cylinder 2 over the discharge valve 4, thereby protecting the discharge valve during storage, transport and handling. In order to install the gas cylinder 2 in its desired position for use, or to connect the discharge valve 4 to other equipment for receiving the pressurised gas from the discharge port 5, it is necessary to remove the cap 6 from the gas cylinder 2. However, during the period between removing the cap 6 and installing or connecting the gas cylinder 2, the discharge valve 4 may be inadvertently opened, e.g. by knocking or dropping the cylinder 2. This presents a safety hazard, since the gas itself may be hazardous and/or the sudden release of the gas from the cylinder 2 may cause the cylinder 2 to violently recoil.

It is also known in the art to provide a safety cap that allows the gas to discharge from the cylinder if the discharge valve 4 is inadvertently opened, but in a manner that substantially does not cause the cylinder to recoil. This is achieved by arranging pairs of apertures in the wall of the cap, wherein the apertures in each pair are arranged on opposing sides of the cap such that when the gas discharges through these openings there is substantially no net force on the cap. However, these caps must also be removed during installation and connection of the gas cylinder to other equipment and so these caps still present a recoil hazard during this period.

Embodiments of the present invention provide a safety cap that need not be removed during installation and connection of the gas cylinder to other equipment.

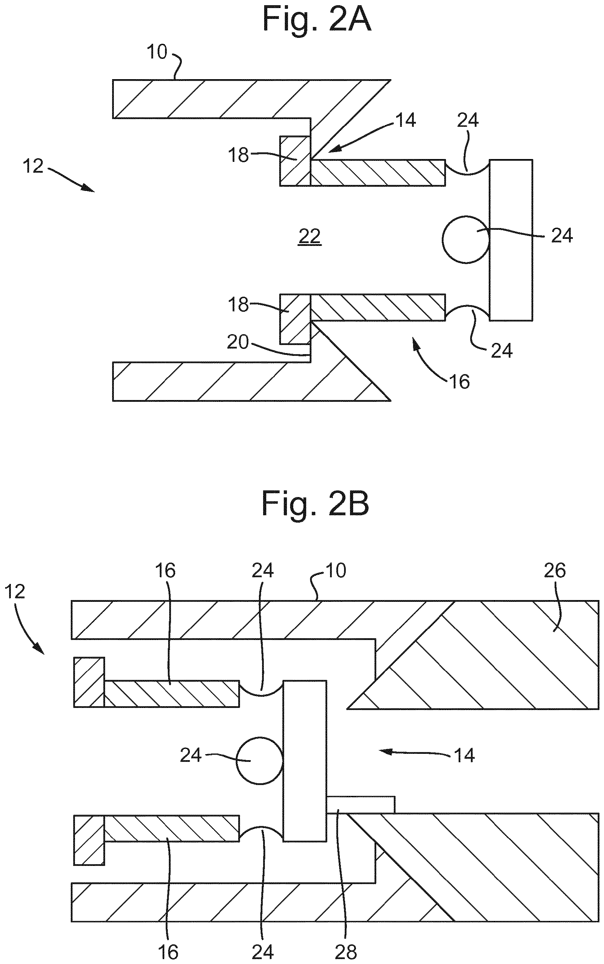

Fig. 2A shows a schematic of a safety cap according to an embodiment of the present invention in a first configuration. The cap comprises a housing sleeve 10 having an entrance port 12 for securing to the gas cylinder 2 and an exit port 14 for use in a second configuration, which will be described in more detail below. The entrance port 12 is secured to the gas cylinder 2 over the discharge port 5 of the gas cylinder 2. This may be achieved by providing screw threads on the housing sleeve 10 proximate to the entrance opening 12 that cooperate with screw threads on the gas cylinder 2 that are proximate to the discharge port 5. However, other means of securing the sleeve 10 to the cylinder 2 are also contemplated, such as welding, soldering or riveting etc.

The cap also includes a carriage member 16, which in the first configuration fills the exit port 14 and protrudes out of the housing 10 through the exit port 14. The carriage member 16 is movable along the axis of the exit port 14, but is biased in a direction out of the exit port 14 to the position shown in Fig. 2A. The carriage member 16 may be biased by one or more springs, or by any other resilient biasing members. The carriage member 16 is biased through the exit port 14 until one or more stop members 18 on the carriage member 16 abut one or more stop members 20 on the housing 10 so as to prevent the carriage member 16 leaving the housing 10 completely through the exit port 14. The carriage member 16 is a hollow member having a gas conduit 22 therethrough, which is in fluid communication with the entrance port 12. The carriage member 16 has anti-recoil apertures 24 therethrough for allowing fluid communication between the entrance port 12 and the exterior of the safety cap, in the first configuration. The anti-recoil apertures 24 are arranged in pairs, with a first anti-recoil aperture in each pair located so that gas may exit the carriage 16 in a first direction and a second anti-recoil aperture located so that gas may simultaneously exit the carriage 16 in a second direction opposite to the first direction. The axes through the anti-recoil apertures 24 in each pair are desirably coaxial. Any number of pairs of anti-recoil apertures 24 may be provided, although the sectional view of Fig. 2A shows a first pair and one of the apertures of a second pair.

The safety cap is connected to the gas cylinder 2 and remains in the first configuration described above during storage, transportation and handling, i.e. for the period before it is desired that gas is discharged from the gas cylinder 2. If the discharge valve 4 of the gas cylinder 2 is inadvertently opened, e.g. due to the cylinder 2 being dropped or knocked, then the pressurised gas 8 will exit the cylinder 2 through the discharge port 5 of the discharge valve 4 and pass into the entrance port 12 of the safety cap. The gas 8 will then pass into the conduit 22 in the carriage member 16 and out of the anti-recoil apertures 24. As the anti-recoil apertures 24 are arranged in pairs as described above, the gas 8 will exit the cap in opposite directions with substantially the same magnitude in each direction. As such, although the cap does not prevent the gas 8 from being discharged inadvertently, it does prevent such a gas discharge from causing the cap (and hence the cylinder) from violently recoiling.

Although gas 8 may inadvertently discharge as described above, it is desired that the gas 8 will not be discharged until the desired moment, i.e. after a gas connector has been arranged in fluid communication with the discharge port 5 on the gas cylinder 2. Conventionally, this has required the safety cap to be removed from the cylinder 2, thus posing a safety hazard until the gas connector has been connected. In contrast, embodiments of the present invention do not require the safety cap to be removed in order to arrange the gas connector in fluid communication with the discharge valve 4 on the gas cylinder 2.

Referring back to Fig. 2A, a gas connector (not shown) is pushed towards the exit port 14 and against the carriage member 16 so as to force the carriage member 16 against the springs and into the housing 10. The gas connector is then connected to the exit port 14 of the safety cap. This may be achieved by providing screw threads on the housing sleeve 10 proximate to the exit opening 14 that cooperate with screw threads on the gas connector. However, other means of securing the sleeve 10 to the gas connector are also contemplated. Means that allow the gas connector to be repeatedly connected and disconnected are desirably used.

Fig. 2B shows the safety cap of Fig. 2A after connection of the gas connector 26 to the exit opening 14. The gas connector 26 may be configured with a protrusion 28 that enters through the exit port 14 of the cap during connection so as to force the cap into a second configuration in which the carriage member 16 is pushed to a position upstream of the exit port 14. It is alternatively contemplated that the protrusion 28 may be part of the carriage member 16 rather than the gas connector 26, so as to enable conventional gas connectors to be used to perform this function.

Once the gas connector 26 has been connected to the exit port 14, the discharge valve 4 of the gas cylinder 2 may be deliberately opened, allowing gas to enter the entrance port 12 of the cap. The gas flows through the housing 10, past the carriage member 16, out of the exit port 14 and into the gas connector 26. The gas 8 may then be delivered to whatever equipment is connected to the gas connector 26. For example, the gas connector 26 may be a connector of a fire suppression system that is connected to gas distribution piping and one or more distribution nozzles. Such a system may comprise a smoke and/or heat and/or gas and/or flame detector that triggers the opening of the discharge valve 5 on the gas cylinder 2 upon detection of smoke and/or heat and/or a gas and/or flames.

It will therefore be appreciated that that the carriage member 16 acts as a valve that is movable between first and second positions. In a first position, the entrance port 12 and anti-recoil apertures 24 are in fluid communication such that gas is substantially only able to flow out of the safety cap through the anti-recoil apertures 24 and in opposing directions out of the cap. In a second position, gas 8 is unable to exit the safety cap through the anti-recoil apertures 24, but rather the entrance and exit ports 12,14 are in fluid communication such that gas is 8 able to flow from the entrance port 12, through the exit port 14 and out of the safety cap.

The mechanism may be configured such that the gas discharge is not slowed by the safety cap during the first and/or second configurations. For example, the cap may be configured such that in the second configuration the annulus around the carriage member 16 is no smaller than the discharge port 5 on the gas cylinder 2 (or smallest aperture on the cylinder 2).

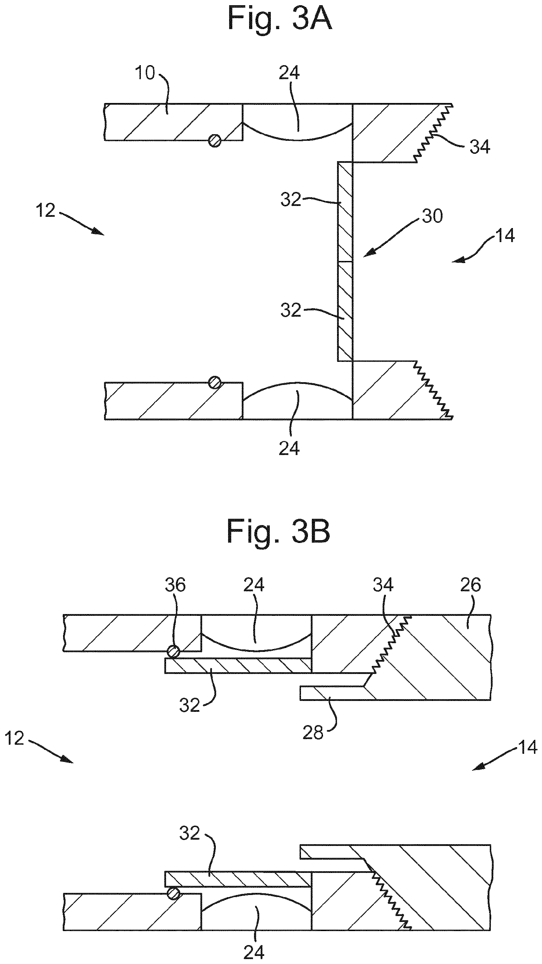

Figs. 3A-3B show schematics of a safety cap according to another embodiment in first and second configurations. Fig. 3A shows a schematic of a safety cap in a first configuration. The cap comprises a housing sleeve 10 having an entrance port 12 for securing to the gas cylinder 2 and an exit port 14 for use in a second configuration, which will be described in more detail in relation to Fig. 3B. The entrance port 12 is secured to the gas cylinder 2 in the same manner as described above. The housing 10 also comprises anti-recoil apertures 24 therethrough for allowing fluid communication between the entrance port 10 and the exterior of the safety cap, in the first configuration. The anti-recoil apertures 24 are arranged in pairs, with a first anti-recoil aperture in each pair located so that gas 8 may exit the housing 10 in a first direction and a second anti-recoil aperture located so that gas may simultaneously exit the housing in a second direction opposite to the first direction. The axes through the anti-recoil apertures in each pair are desirably coaxial. Any number of pairs of anti-recoil apertures 24 may be provided, although the sectional view of Fig. 3A shows only a first of apertures.

The housing 10 also includes a valve 30 between the entrance and exit ports 12,14 that is formed from pivotable blocking members 32 that are pivotably attached to the walls of the housing 10. The blocking members 32 are biased in a direction to close the conduit between the entrance and exit ports 12,14, i.e. to the position shown in Fig. 3A. The blocking members 32 may be biased by one or more springs, or by any other resilient biasing members.

The safety cap is connected to the gas cylinder 2 and remains in the first configuration described above during storage, transportation and handling, i.e. for the period before it is desired that gas 8 is discharged from the gas cylinder 2. If the discharge valve 4 of the gas cylinder 2 is inadvertently opened, e.g. due to the cylinder 2 being dropped or knocked, then the pressurised gas 8 will exit the cylinder 2 through the discharge port 5 of the discharge valve 4 and pass into the entrance port 12 of the safety cap. The gas 8 will then pass out of the anti-recoil apertures 24. As the anti-recoil apertures 24 are arranged in pairs as described above, the gas 8 will exit the cap in opposite directions with substantially the same magnitude in each direction and prevent the cap (and hence the cylinder) from violently recoiling.

Referring to Fig. 3B, a gas connector 26 is connected to the exit port 14 of the safety cap during installation of the gas cylinder 2. This may be achieved by providing screw threads 34 on the housing sleeve 10 proximate to the exit opening 14 that cooperate with screw threads on the gas connector 26. However, other means of securing the sleeve 10 to the gas connector 26 are also contemplated. Means that allow the gas connector 26 to be repeatedly connected and disconnected are desirably used.

Fig. 3B shows the safety cap of Fig. 2A after connection of the gas connector 26 to the exit opening 14. The gas connector 26 may be configured with one or more protrusion 28 that enters through the exit port 14 of the cap during connection so as to force the cap into a second configuration in which the blocking members 32 are pivoted open so as to open the conduit between the entrance and exit ports 12,14. It is alternatively contemplated that the protrusions 28 may extend from the downstream side of the blocking members 32, rather than the gas connector 26, so as to enable conventional gas connectors 26 to be used to perform this function. The blocking members 32 are pivoted until they cover the anti-recoil apertures 24, thus preventing gas 8 from passing through those apertures 24. One or more seal 36 may be arranged on the housing wall(s) or on the blocking members 32 (e.g. an O-ring) so that when the blocking members 32 are pivoted open the seal(s) 36 is arranged between the blocking members 32 and the housing wall(s), thereby presenting a gas tight seal that prevents the gas 8 from leaving through the apertures 24.

Once the gas connector 26 has been connected to the exit port 14, the discharge valve 4 of the gas cylinder 2 may be deliberately opened, allowing gas 8 to enter the entrance port 12 of the cap. The gas flows through the housing 10, out of the exit port 14 and into the gas connector 26. The gas 8 may then be delivered to whatever equipment is connected to the gas connector 26, in the same manner as described above.

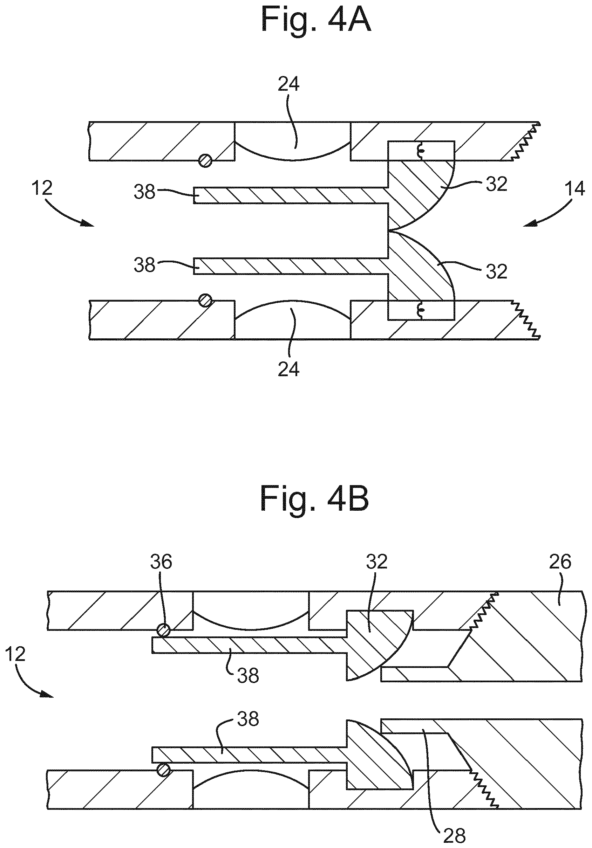

Figs. 4A-4B show schematics of a safety cap according to another embodiment in first and second configurations. This embodiment is similar to that shown and described in relation to Figs. 3A-3B, except that the blocking members 32 are radially movable (relative the axis through the exit port 14), rather than being pivotable. The blocking members 32 are biased radially inwards so as to close the conduit between the entrance and exit ports 12,14, as shown in Fig. 4A. The blocking members 32 comprise blocking plates 38 that are positioned so as not to cover the anti-recoil apertures when the conduit is closed. In this position, if the discharge valve 4 of the gas cylinder 2 is inadvertently opened, then the pressurised gas 8 will pass into the entrance port 12 of the safety cap and will then pass out of the anti-recoil apertures 24.

Fig. 4B shows the safety cap of Fig. 4A after connection of the gas connector 26 to the exit opening 14. The gas connector 26 may be configured with one or more protrusion 28 that enters through the exit port 14 of the cap during connection so as to force the cap into a second configuration in which the blocking members 32 are forced radially outwards so as to open the conduit between the entrance and exit ports 12,14. This may be achieved, for example, by providing a curved profile on the downstream side of the blocking members 32 such that when the protrusion 28 of the gas connector 26 enters the exit port 14 it pushes against the curved surface and progressively forces the blocking members 32 radially outwards. The blocking members 32 are forced radially outwards until the blocking plates 38 cover the anti-recoil apertures 24, thus preventing gas 8 from passing through those apertures 24. One or more seal 36 may be arranged on the housing wall(s) or on the blocking members 32 (e.g. an O-ring) so that when the blocking members 32 are forced outwards the seal(s) 36 is arranged between the blocking members 32 and the housing wall(s), thereby presenting a gas tight seal that prevents the gas 8 from leaving through the apertures 24.

Once the gas connector 26 has been connected to the exit port 14, the discharge valve 4 of the gas cylinder 2 may be deliberately opened, allowing gas 8 to enter the entrance port 12 of the cap. The gas flows through the housing 10, out of the exit port 14 and into the gas connector 26. The gas 8 may then be delivered to whatever equipment is connected to the gas connector 26, in the same manner as described above.

It will therefore be appreciated that the embodiments described enable the gas cylinder to be connected to a gas connector without removal of the safety cap. Connection of the gas connector desirably automatically moves the cap to the second configuration and the valve to the second position.

Although the present invention has been described with reference to embodiments, it will be understood by those skilled in the art that various changes in form and detail may be made without departing from the scope of the invention as set forth in the accompanying claims.

For example, although the valve has been described as comprising pivotable or radially movable blocking members, it may alternatively comprise an iris closure that is biased to a closed position so as to block the conduit between the entrance and exit ports. The iris closure may be configured to be automatically opened by connection of the gas connector. For example, the action of screwing the gas connector onto the cap may rotate the iris closure into an open position so as to provide a gas connection between the entrance and exit ports. The iris member may be connected to one or more blocking plates. When the iris is in the closed position, the blocking plates may be positioned so as not to cover the anti-recoil apertures. When the iris is rotated to the open position the blocking plates may rotate therewith (about an axis thorough the exit port) so as to cover the anti-recoil apertures.

## Claims

1. A safety cap for a pressurised fluid storage vessel (2) comprising:
an entrance port (12) for receiving fluid from the storage vessel (2);
at least one pair of anti-recoil apertures (24) through one or more walls of the cap;
an exit port (14); **characterised in that** the safety cap further comprises a valve (16, 30, 38) that is movable between first and second positions;
and **in that** the valve is movable between:
(i) a first position in which the entrance port (12) and anti-recoil apertures (24) are in fluid communication such that fluid is able to flow out of the safety cap through the anti-recoil apertures (24) and in opposing directions; and
(ii) a second position in which the fluid is unable to exit the safety cap through the anti-recoil apertures (24) and in which the entrance port (12) and exit port (14) are in fluid communication such that fluid is able to flow from the entrance port (12), through the exit port (14) and out of the safety cap.

2. The safety cap of claim 1, wherein the valve (16, 30, 38) is biased towards the first position.

3. The safety cap of claim 1 or 2, wherein the valve (16, 30, 38) is movable to the second position upon insertion of an object into the exit port (14) or by attachment of a connector to the exit port.

4. The safety cap of any preceding claim, wherein the safety cap comprises first connecting means proximate the entrance port (12) for securing the cap to the fluid storage vessel; optionally wherein the first connecting means comprises a screw thread; and/or
wherein the safety cap comprising second connecting means proximate the exit port (14) for securing the cap to a connector of another equipment; optionally wherein the second connecting means comprises a screw thread.

5. The safety cap of any preceding claim, comprising a housing defining the entrance (12) and exit (14) ports, wherein the valve (16, 30, 38) comprises a carriage member having the anti-recoil apertures (24) arranged therein and that is movable within the housing such that when the valve (16, 30, 38) is in the first position the carriage member fills the exit port (14) and protrudes therethrough so that the anti-recoil apertures (24) are arranged outside of the housing for permitting fluid to flow from the entrance port (12), through the housing and out of the cap through the anti-recoil apertures (24).

6. The safety cap of claim 5, wherein the carriage member is movable within the housing such that when the valve (16, 30, 38) is in the second position the anti-recoil apertures (24) are retracted within the housing.

7. The safety cap of claim 5 or 6, wherein the cap is configured such that when the valve (16, 30, 38) is in the second position the carriage member does not fill the exit port (14).

8. The safety cap of claim 5, 6 or 7, wherein the cap is configured such that when the valve (16, 30, 38) is in the second position the fluid is able to flow from the entrance port (12), around and/or through the carriage member and out of the exit port (14); and/or
wherein the cap is configured such that when the valve (16, 30, 38) is in the first position the fluid is not able to flow around the carriage member and out of the exit port (14).

9. The safety cap of any one of claims 1-4, comprising a housing defining the entrance port (12), exit port (14) and anti-recoil apertures (24); wherein the valve (16, 30, 38) comprises one or more blocking members arranged so that when the valve is in the first position the one or more blocking members prevent fluid flowing from the entrance port (12) out of the exit port (14), and when the valve (16, 30, 38) is in the second position the one or more blocking members move so as to cover the anti-recoil apertures (24) such that fluid is unable to flow from the entrance port and out of the anti-recoil apertures.

10. A fluid storage system comprising:
a fluid storage vessel (2) having a discharge port for discharging pressurised fluid stored therein; and
a safety cap according to any preceding claim connected, or connectable, to the fluid storage vessel such that the entrance port (12) of the safety cap is arranged over the discharge port of the fluid vessel.

11. The system of claim 10, wherein the fluid storage vessel (2) contains a pressurised fire suppressant, such as inert gas.

12. The system of claim 10 or 11, wherein fluid gas storage vessel (2) comprises a discharge valve at or upstream of the discharge port.

13. The system of claim 10, 11 or 12, further comprising a fluid connector connected, or configured to be connectable, to the exit port of the safety cap in a fluid tight manner, wherein the fluid connector and safety cap valve (16, 30, 38) are configured so that upon connection of the fluid connector to the exit port the valve (16, 30, 38) is automatically moved from the first position to the second position.

14. The system of claim 13, wherein the fluid connector is configured with a portion that extends into the exit port (14) after connection so as to force the valve (16, 30, 38) from the first position to the second position; and/or
wherein the valve (16, 30, 38) is configured with a protrusion that extends in a downstream direction so that after connection the fluid connector abuts the protrusion and maintains the valve (16, 30, 38) in the second position.

15. The system of claim 13 or 14, further comprising fluid distribution piping connected to the fluid connector for conveying the fluid from the fluid connector to another area, such as an area to be protected from fire.

## Patentansprüche

1. Sicherheitskappe für einen unter Druck stehenden Fluidspeicherbehälter (2), umfassend:
eine Eintrittsöffnung (12), um Fluid von dem Speicherbehälter (2) aufzunehmen;
mindestens ein Paar Rückstoßschutzöffnungen (24) durch eine oder mehrere Wände der Kappe;
eine Austrittsöffnung (14); **dadurch gekennzeichnet, dass** die Sicherheitskappe ferner
ein Ventil (16, 30, 38) umfasst, das zwischen einer ersten Position und einer zweiten Position beweglich ist;
und dadurch, dass das Ventil beweglich ist zwischen:
(i) einer ersten Position, in der die Eintrittsöffnung (12) and Rückstoßschutzöffnungen (24) in Fluidkommunikation stehen, so dass Fluid aus der Sicherheitskappe durch die Rückstoßschutzöffnungen (24) und in entgegengesetzte Richtungen ausströmen kann; und
(ii) einer zweiten Position, in der das Fluid nicht aus der Sicherheitskappe durch die Rückstoßschutzöffnungen (24) austreten kann und in der die Eintrittsöffnung (12) und die Austrittsöffnung (14) in Fluidkommunikation stehen, so dass Fluid von der Eintrittsöffnung (12) durch die Austrittsöffnung (14) und aus der Sicherheitskappe herausströmen kann.

2. Sicherheitskappe nach Anspruch 1, wobei das Ventil (16, 30, 38) in Richtung auf die erste Position vorgespannt ist.

3. Sicherheitskappe nach Anspruch 1 oder 2, wobei das Ventil (16, 30, 38) in die zweite Position bei Einsetzen eines Gegenstands in die Austrittsöffnung (14) oder durch Anbringen einer Verbindung an die Austrittsöffnung bewegt werden kann.

4. Sicherheitskappe nach einem der vorstehenden Ansprüche, wobei die Sicherheitskappe ein erstes Verbindungsmittel unmittelbar an der Eintrittsöffnung (12) umfasst, um die Kappe am Fluidspeicherbehälter zu fixieren; optional wobei das erste Verbindungsmittel ein Schraubengewinde umfasst; und/oder
wobei die Sicherheitskappe ein zweites Verbindungsmittel unmittelbar an der Austrittsöffnung (14) umfasst, um die Kappe an einer Verbindung einer anderen Vorrichtung zu fixieren; wobei optional das zweite Verbindungsmittel ein Schraubengewinde umfasst.

5. Sicherheitskappe nach einem der vorstehenden Ansprüche, umfassend ein Gehäuse, das die Eintritts- (12) und die Austrittsöffnung (14) definiert, wobei das Ventil (16, 30, 38) ein Schlittenelement umfasst, in dem die Rückstoßschutzöffnungen (24) angeordnet sind und das innerhalb des Gehäuses derart beweglich ist, dass, wenn sich das Ventil (16, 30, 38) in der ersten Position befindet, das Schlittenelement die Austrittsöffnung (14) ausfüllt und dadurch hervorragt, so dass die Rückstoßschutzöffnungen (24) außerhalb des Gehäuses angeordnet sind, um es zu ermöglichen, dass Fluid von der Eintrittsöffnung (12) durch das Gehäuse und aus der Kappe heraus durch die Rückstoßschutzöffnungen (24) strömt.

6. Sicherheitskappe nach Anspruch 5, wobei das Schlittenelement innerhalb des Gehäuses derart beweglich ist, dass, wenn das Ventil (16, 30, 38) sich in der zweiten Position befindet, die Rückstoßschutzöffnungen (24) in das Gehäuse zurückgezogen sind.

7. Sicherheitskappe nach Anspruch 5 oder 6, wobei die Kappe so konfiguriert ist, dass, wenn sich das Ventil (16, 30, 38) in der zweiten Position befindet, das Schlittenelement die Austrittsöffnung (14) nicht ausfüllt.

8. Sicherheitskappe nach Anspruch 5, 6 oder 7, wobei die Kappe so konfiguriert ist, dass wenn sich das Ventil (16, 30, 38) in der zweiten Position befindet, das Fluid von der Eintrittsöffnung (12) um und/oder durch das Schlittenelement und aus der Austrittsöffnung (14) herausströmen kann; und/oder wobei die Kappe so konfiguriert ist, dass, wenn sich das Ventil (16, 30, 38) in der ersten Position befindet, das Fluid nicht um das Schlittenelement herum und aus der Austrittsöffnung (14) herausströmen kann.

9. Sicherheitskappe nach einem der Ansprüche 1-4, umfassend ein Gehäuse, das die Eintrittsöffnung (12), die Austrittsöffnung (14) und Rückstoßschutzöffnungen (24) definiert; wobei das Ventil (16, 30, 38) ein oder mehrere Sperrelemente umfasst, die derart angeordnet sind, dass, wenn sich das Ventil in der ersten Position befindet, das eine oder die mehreren Sperrelement(e) verhindert/verhindern, dass Fluid von der Eintrittsöffnung (12) aus der Austrittsöffnung (14) herausströmt, und dass sich, wenn sich das Ventil (16, 30, 38) in der zweiten Position befindet, das eine oder die mehreren Sperrelemente derart bewegt/bewegen, dass es/sie die Rückstoßschutzöffnungen (24) abdeckt/abdecken, so dass kein Fluid von der Eintrittsöffnung und aus den Rückstoßschutzöffnungen strömen kann.

10. Fluidspeichersystem, umfassend:
einen Fluidspeicherbehälter (2), der eine Ausstoßöffnung zum Ausstoßen von unter Druck stehendem Fluid, das darin gespeichert wird, aufweist; und
eine Sicherheitskappe nach einem der vorstehenden Ansprüche, die mit dem Fluidspeicherbehälter so verbunden ist oder so verbunden werden kann, dass die Eintrittsöffnung (12) der Sicherheitskappe über der Ausstoßöffnung des Fluidbehälters angeordnet ist.

11. System nach Anspruch 10, wobei der Fluidspeicherbehälter (2) ein unter Druck stehendes feuerunterdrückendes Mittel, wie etwa Inertgas, enthält.

12. System nach Anspruch 10 oder 11, wobei der Fluidgasspeicherbehälter (2) ein Ablassventil umfasst, das an der Ausstoßöffnung oder stromaufwärts davon angeordnet ist.

13. System nach Anspruch 10, 11 oder 12, ferner umfassend eine Fluidverbindung, die mit der Austrittsöffnung der Sicherheitskappe in einer fluiddichten Weise verbunden ist oder konfiguriert ist, um damit verbunden werden zu können,
wobei die Fluidverbindung und das Sicherheitskappenventil (16, 30, 38) so konfiguriert sind, dass nach dem Anschluss der Fluidverbindung an der Austrittsöffnung das Ventil (16, 30, 38) automatisch von der ersten Position in die zweite Position bewegt wird.

14. System nach Anspruch 13, wobei die Fluidverbindung mit einem Abschnitt konfiguriert ist, der sich nach dem Anschluss in die Austrittsöffnung (14) erstreckt, um das Ventil (16, 30, 38) von der ersten Position in die zweite Position zu drängen; und/oder
wobei das Ventil (16, 30, 38) mit einem Vorsprung konfiguriert ist, der in einer stromabwärtigen Richtung verläuft, so dass nach dem Anschluss die Fluidverbindung direkt an den Vorsprung anstößt und das Ventil (16, 30, 38) in der zweiten Position hält.

15. System nach Anspruch 13 oder 14, ferner umfassend eine Fluidverteilungsleitung, die mit der Fluidverbindung verbunden ist, um das Fluid von der Fluidverbindung in einen anderen Bereich zu transportieren, wie einen Bereich, der vor Feuer geschützt werden soll.

## Revendications

1. Bouchon de sécurité destiné à un récipient de stockage de fluide sous pression (2) comprenant :
un orifice d'entrée (12) destiné à recevoir le fluide provenant du récipient de stockage (2) ;
au moins une paire d'ouvertures anti-recul (24) à travers une ou plusieurs parois du bouchon ;
un orifice de sortie (14) ; **caractérisé en ce que** le bouchon de sécurité comprend en outre
une vanne (16, 30, 38) qui peut se déplacer entre des première et seconde positions ;
et **en ce que** la vanne peut se déplacer entre :
(i) une première position dans laquelle l'orifice d'entrée (12) et les ouvertures anti-recul (24) sont en communication fluidique de sorte que le fluide peut s'écouler par le bouchon de sécurité à travers les ouvertures anti-recul (24) et dans des directions opposées ; et
(ii) une seconde position dans laquelle le fluide ne peut pas sortir du bouchon de sécurité à travers les ouvertures anti-recul (24) et dans laquelle l'orifice d'entrée (12) et l'orifice de sortie (14) sont en communication fluidique de sorte que le fluide peut s'écouler depuis l'orifice d'entrée (12), à travers l'orifice de sortie (14) et par le bouchon de sécurité.

2. Bouchon de sécurité selon la revendication 1, dans lequel la vanne (16, 30, 38) est sollicitée vers la première position.

3. Bouchon de sécurité selon la revendication 1 ou 2, dans lequel la vanne (16, 30, 38) peut se déplacer vers la seconde position lors de l'insertion d'un objet dans l'orifice de sortie (14) ou par la fixation d'un raccord à l'orifice de sortie.

4. Bouchon de sécurité selon une quelconque revendication précédente, dans lequel le bouchon de sécurité comprend un premier moyen de raccordement à proximité de l'orifice d'entrée (12) pour fixer le bouchon au récipient de stockage de fluide ; éventuellement dans lequel le premier moyen de raccordement comprend un filetage de vis ; et/ou
dans lequel le bouchon de sécurité comprenant un second moyen de raccordement se situe à proximité de l'orifice de sortie (14) pour fixer le bouchon à un raccord d'un autre équipement ; éventuellement dans lequel le second moyen de raccordement comprend un filetage de vis.

5. Bouchon de sécurité selon une quelconque revendication précédente, comprenant un boîtier définissant les orifices d'entrée (12) et de sortie (14), dans lequel la vanne (16, 30, 38) comprend un élément de chariot ayant les ouvertures anti-recul (24) disposées à l'intérieur et qui peut se déplacer à l'intérieur du boîtier de sorte que, lorsque la vanne (16, 30, 38) est dans la première position, l'élément de chariot remplit l'orifice de sortie (14) et fait saillie à travers celui-ci de sorte que les ouvertures anti-recul (24) sont disposées à l'extérieur du boîtier pour permettre au fluide de s'écouler depuis l'orifice d'entrée (12), à travers le boîtier et par le bouchon à travers les ouvertures anti-recul (24).

6. Bouchon de sécurité selon la revendication 5, dans lequel l'élément de chariot peut se déplacer à l'intérieur du boîtier de sorte que, lorsque la vanne (16, 30, 38) est dans la seconde position, les ouvertures anti-recul (24) sont rétractées à l'intérieur du boîtier.

7. Bouchon de sécurité selon la revendication 5 ou 6, dans lequel le bouchon est configuré de sorte que, lorsque la vanne (16, 30, 38) est dans la seconde position, l'élément de chariot ne remplit pas l'orifice de sortie (14).

8. Bouchon de sécurité selon la revendication 5, 6 ou 7, dans lequel le bouchon est configuré de sorte que, lorsque la vanne (16, 30, 38) est dans la seconde position, le fluide peut s'écouler depuis l'orifice d'entrée (12), autour et/ou à travers l'élément de chariot et par l'orifice de sortie (14) ; et/ou
dans lequel le bouchon est configuré de sorte que, lorsque la vanne (16, 30, 38) est dans la première position, le fluide ne peut pas s'écouler autour de l'élément de chariot et par l'orifice de sortie (14).

9. Bouchon de sécurité selon l'une quelconque des revendications 1 à 4, comprenant un boîtier définissant l'orifice d'entrée (12), l'orifice de sortie (14) et les ouvertures anti-recul (24) ; dans lequel la vanne (16, 30, 38) comprend un ou plusieurs éléments de blocage disposés de sorte que, lorsque la vanne est dans la première position, les un ou plusieurs éléments de blocage empêchent le fluide de s'écouler depuis l'orifice d'entrée (12) par l'orifice de sortie (14), et lorsque la vanne (16, 30, 38) est dans la seconde position, les un ou plusieurs éléments de blocage se déplacent de manière à recouvrir les ouvertures anti-recul (24) de sorte que le fluide ne peut pas s'écouler depuis l'orifice d'entrée et par les ouvertures anti-recul.

10. Système de stockage de fluide comprenant :
un récipient de stockage de fluide (2) ayant un orifice de décharge pour décharger un fluide sous pression stocké dans celui-ci ; et
un bouchon de sécurité selon une quelconque revendication précédente, raccordé ou pouvant être raccordé au récipient de stockage de fluide de sorte que l'orifice d'entrée (12) du bouchon de sécurité est disposé sur l'orifice de décharge du récipient de fluide.

11. Système selon la revendication 10, dans lequel le récipient de stockage de fluide (2) contient un agent de lutte contre l'incendie sous pression, tel qu'un gaz inerte.

12. Système selon la revendication 10 ou 11, dans lequel le récipient de stockage de gaz fluide (2) comprend une vanne de décharge au niveau ou en amont de l'orifice de décharge.

13. Système selon la revendication 10, 11 ou 12, comprenant en outre un raccord de fluide raccordé, ou configuré pour pouvoir être raccordé, à l'orifice de sortie du bouchon de sécurité d'une manière étanche aux fluides, dans lequel le raccord de fluide et la vanne de bouchon de sécurité (16, 30, 38) sont configurés de manière à ce que lors du raccordement du raccord de fluide à l'orifice de sortie, la vanne (16, 30, 38) est automatiquement déplacée de la première position à la seconde position.

14. Système selon la revendication 13, dans lequel le raccord de fluide est configuré avec une partie qui s'étend dans l'orifice de sortie (14) après le raccordement de manière à forcer la vanne (16, 30, 38) de la première position à la seconde position ; et/ou
dans lequel la vanne (16, 30, 38) est configurée avec une saillie qui s'étend dans une direction en aval de sorte qu'après le raccordement, le raccord de fluide vient en butée contre la saillie et maintient la vanne (16, 30, 38) dans la seconde position.

15. Système selon la revendication 13 ou 14, comprenant en outre une conduite de distribution de fluide raccordée au raccord de fluide pour acheminer le fluide du raccord de fluide vers une autre zone, telle qu'une zone à protéger contre l'incendie.
